Europäisches Patentamt

(19) European Patent Office

Office européen des brevets

(11) Publication number: **0 008 878**
**A1**

## (12) EUROPEAN PATENT APPLICATION

(21) Application number: 79301560.3

(22) Date of filing: 03.08.79

(51) Int. Cl.³: **F 16 B 7/04**

(30) Priority: 26.08.78 GB 3475878

(43) Date of publication of application:
19.03.80 Bulletin 80/6

(84) Designated Contracting States:
DE FR SE

(71) Applicant: Martin-Thomas Limited
South Way Walworth Industrial Estate
Andover Hampshire(GB)

(72) Inventor: Mattinson, Frederick
150 Barkby Road
Syston Leicester(GB)

(74) Representative: MATTHEWS HADDAN & CO
Haddan House 33 Elmfield Road
Bromley, Kent BR1 1SU(GB)

(54) Disconnectible joints.

(57) The invention provides a joint device for connecting two frame members (30, 31) together in axial alignment, one frame member (30) having a joint member (33) forming a housing over a joint member (39) on the other frame member (31), and pins (45, 44) pass through holes (40, 41) in both joint members (33, 39) to hold them together.

EP 0 008 878 A1

./...

Croydon Printing Company Ltd.

./...

FIG. 2

0008878

This invention relates to disconnectible joints more particularly for use in joining members such as tubes or bars for framework structures.  Such structures are commonly erected in the form of the kind consisting of scaffolding and builders' staging and as docking structures for building and servicing aircraft.  It is an object of the invention to provide a joint which is stable and reliable, simple to make and inexpensive and which can readily be taken apart without special tools such as screwdrivers and spanners so that the parts of the structure can be packed flat for transport and readily re-erected on site.

It has been known to connect frame members by sleeves or by spigots but these are not altogether satisfactory as they must be unduly long to achieve stability and sometimes are misaligned so that they bind tightly together.  Also such joints may be fixed by bolts or other screw-threaded means which require spanners or other special tools and involve time consuming operations to dismantle them.

According to the invention two elongate members to be connected in axial alignment are provided at their adjacent ends with joint members one of which forms a housing to receive the other and each of which has a plate transverse to the axis of the elongate members and provided with side wall means and the side wall means of each member has at least two holes therein on one side aligned with two holes in the side wall means on the opposite side, the holes in one joint member also being in alignment with the holes in the other joint member when said joint members are engaged one within the other and pins enter the holes to lock the joint members together.

The pins may extend through and beyond the joint members and may each have a head on one end and a hole near the other end to receive a clip or cotter pin.

The joint members may be welded to the elongate members and the housing joint member may be provided with webs welded to the elongate member and to the transverse plate.

The joint members may be U-shaped channel members.

One or each of the elongate members may also carry plates extending transversely to said elongate member parallel to the axis thereof and to each other, said plates having aligned holes to receive pins which also pass through holes in other elongate frame members that are disposed transversely to the plate carrying frame member.

A constructional form of the invention will now be described by way of example with reference to the accompanying diagrammatic drawings wherein:-

FIGURE 1 is a perspective view of a typical framework structure; and

FIGURE 2 is an "exploded" view of a joint made in accordance with the invention.

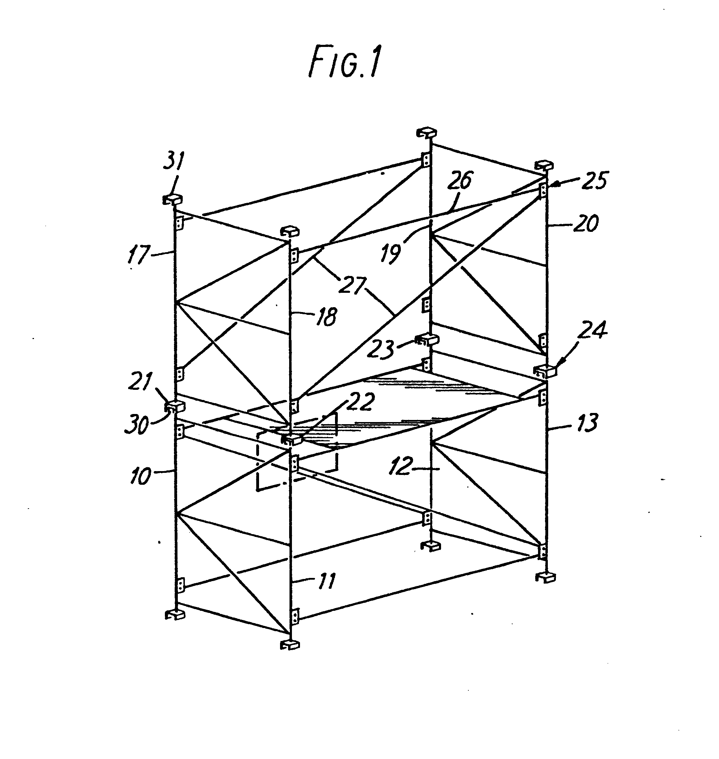

In Figure 1 the structure comprises upright tubular frame members 10, 11, 12, 13. The members 10, 11, 12, 13 are connected with uprights 17, 18, 19, 20 by joints 21, 22, 23, 24.

The uprights are further connected by joints 25 with horizontal frame members 26 and diagonal frame members 27.

Other joints may be provided for frame members extending in other directions.

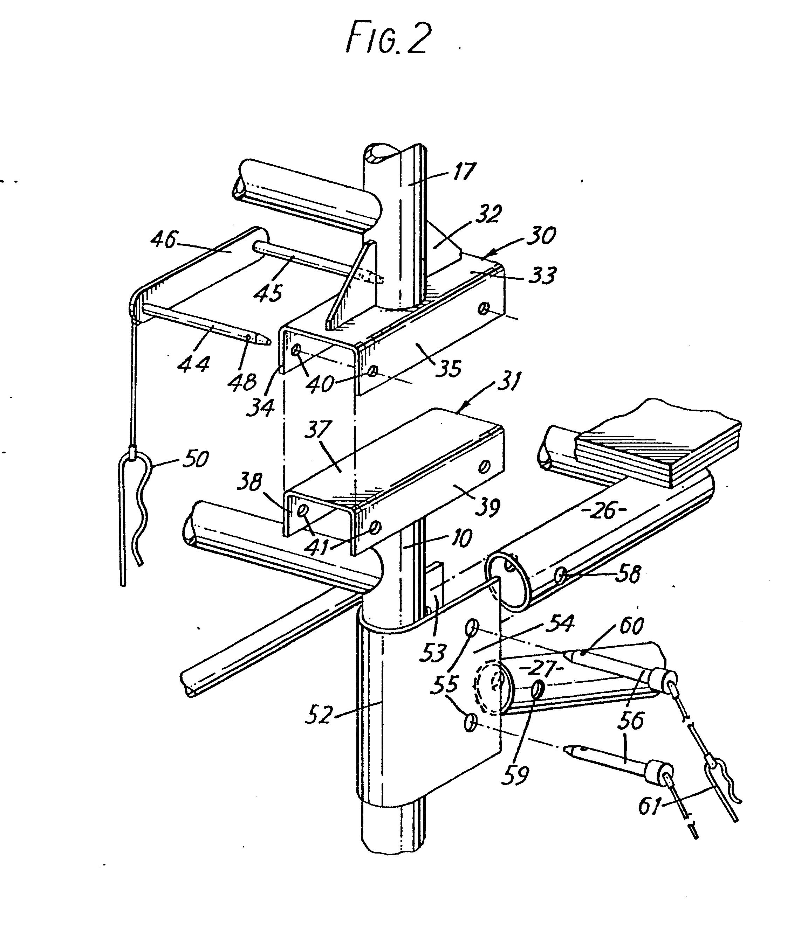

The joints 21, 22, 23, 24 are as shown in the upper part of Figure 2. Two joint members 30, 31 are provided welded to the adjacent ends of the aligned frame members 17, 10. The joint members are in the form of U-shaped channels extending beyond opposite sides of the members 10, 17. The member 30 is slightly larger than the member 31 so that the latter can be housed within the member 30 with an easy sliding fit. The member 30 has a transverse plate 33 carrying walls or flanges 34, 35 on opposite sides of the frame members 10, 17. Webs 32 are welded to the plate 33 and to the member 17. Similarly the member 31 has a transverse plate 37 and walls or flanges 38, 39. Each of the walls of member 30 has two holes 40 therein on opposite sides of the member 17, the two holes in one wall being in alignment with the holes in the other wall. The member 31 has similar holes 41. Pins 44, 45 can pass through the holes 40, 41 to lock the joint members 30, 31 together. These pins are joined by a bar 46 at one end. The pins have heads at one end and are long enough to extend through and beyond the joint members and near their projecting ends the pins have holes 48 to receive clips or cotter pins 50.

The joints 23 are as shown at the lower part of Figure 2. A U-shaped member 52 straddles the frame member 10 so as to project on one side as plates 53, 54 which extend transversely of the member 10 and parallel to the axis thereof.

The plates 53, 54 are provided with holes 55, the holes in one plate being in alignment with the holes in the other plate. Pins 56 can be passed through the holes 55 and through holes 58, 59 in transverse and diagonal frame members 26, 27.

The pins project through and beyond the plates and have holes 60 in their projecting ends to receive clips or cotter pins 61.

As shown in Figure 1, uprights may be made each having channel joint members at opposite ends.

WHAT WE CLAIM IS:-

1. A joint device for connecting two elongate frame members together in axial alignment wherein said members are provided at their adjacent ends with joint members one of which forms a housing to receive the other and each of which has a plate transverse to the axis of the elongate members and provided with side wall means, and the side wall means of each member has at least two holes on one side therein aligned with two holes in the side wall means on the opposite side, the holes in one joint member also being in alignment with the holes in the other joint member when said joint members are engaged one within the other, and pins enter the holes to lock the joint members together.

2. A joint device as claimed in Claim 1 wherein the pins extend beyond the joint members and each has a head at one end and a hole at the other end to receive a clip or cotter pin.

3. A joint device as claimed in Claim 1 or 2 wherein the joint members are welded to the elongate members and the housing joint member is provided with webs welded to the frame and to the transverse plate.

4. A joint device as claimed in Claims 1, 2 or 3 wherein the joint members are U-shaped channel members.

5. Elongate frame members one of which has attached to one end thereof a joint member as defined in Claim 1 and having plates attached thereto which extend transversely to the elongate member parallel to the axis thereof and to each other and have aligned holes to receive pins which also pass through holes in other elongate frame members that are disposed trans-

- 6 -

0008878

versely to the plate carrying frame member.

6. Elongate frame members as claimed in Claim 5 wherein the parallel plates are parts of a U-shaped member which passes around the elongate member.

7. A framework structure having two rectangular frames of the same plan size, one seating upon the other and having corner posts connected by joint members as claimed in any of the preceding claims 1 to 4.

8. A framework structure as claimed in Claim 7 having diagonal bars connected at each end to parallel plates as claimed in Claim 5 or 6.

9. An elongate frame member having the two joint devices as claimed in any of Claims 1 to 4 fixed to opposite ends thereof.

10. A framework structure having joint members substantially as described and substantially as illustrated in the accompanying drawings.

FOR THE APPLICANTS:

MATTHEWS, HADDAN & CO.,
Chartered Patent Agents,
Haddan House,
33 Elmfield Road,
Bromley,
Kent BR1 1SU.

0008878

## FIG.1

FIG.2

| Category | Citation of document with indication, where appropriate, of relevant passages | Relevant to claim |
|---|---|---|
| | GB - A - 1 185 169 (SCAFFOLDING) <br> * fig. 21, 25 * | 1,6,7 |
| | US - A - 4 054 392 (OPPENHEIM) <br> * fig. 1 * | 1,4 |
| | US - A - 1 026 845 (BISHOP) <br> * fig. 1 to 7 * | 8,9 |
| | US - A - 3 736 009 (JUHNKE) <br> * fig. 6 * | 1 |
| | DD - A - 6 420 (SCHWARZ et al.) <br> * fig. 6 * | 2 |

## DOCUMENTS CONSIDERED TO BE RELEVANT

**CLASSIFICATION OF THE APPLICATION (Int. Cl.)**

F 16 B    7/04

**TECHNICAL FIELDS SEARCHED (Int.Cl.)**

A 47 B  96/00
E 04 G    7/00
F 16 B    7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 08-11-1979 | ZAPP |

EPO Form 1503.1  06.78